# FASCICULE DE BREVET EUROPEEN

(11) **EP 4 015 093 B1**
(45) Date de publication et mention de la délivrance du brevet: **27.11.2024**
(21) Numéro de dépôt: 21215406.6
(22) Date de dépôt: 17.12.2021
(51) Int. Cl.: B05B 15/555, B05B 5/08, B25J 19/00, B08B 5/02, B05B 14/41, B05B 14/48, B05B 13/04, B25J 11/00, B25J 21/00, B25J 9/00, B05B 5/03, B05B 7/08, B05B 16/00

(54) **ROBOT, SYSTÈME ET PROCÉDÉ DE POUDRAGE ÉLECTROSTATIQUE**
ROBOTER, SYSTEM UND ELEKTROSTATISCHE PULVERBESCHICHTUNG
ROBOT, SYSTEM AND METHOD FOR ELECTROSTATIC POWDERING

(30) Priorité: 18.12.2020 FR 2013708
(43) Date de publication de la demande: 22.06.2022
(73) Titulaire: Exel Industries, 51200 Epernay (FR)
(72) Inventeur: LETARD, François, 75009 Paris (FR)
(74) Mandataire: Lavoix

(56) Documents cités:
- EP-A1- 3 263 228
- WO-A1-2017/033074
- WO-A2-2016/188626
- DE-A1- 102012 018 940
- FR-A1- 2 692 173
- FR-A1- 2 939 056

## Description

La présente invention concerne un robot de poudrage électrostatique, un système de poudrage électrostatique comprenant un tel robot, et un procédé de poudrage électrostatique qui est mis en oeuvre à l'aide d'un tel robot ou d'un tel système.

On connait une cabine de poudrage électrostatique, pour appliquer un revêtement, tel qu'une peinture, sur un article, par poudrage électrostatique dudit article à l'intérieur de la cabine. L'application de la poudre sur l'article est effectuée à l'aide de projecteurs électrostatiques, qui émettent un flux de poudre, alors que les projecteurs et l'article sont portés à des potentiels électriques spécifiques pour que la poudre soit attirée par l'article pour le revêtir. Une fois le poudrage électrostatique de l'article effectué, l'article est transporté jusqu'à un four. Le four porte la poudre à une température, pour qu'un matériau thermodurcissable constituant la poudre soit réticulé, fixant ainsi le revêtement sur l'article.

Malgré l'effet électrostatique, une partie de la poudre émise pour le poudrage de l'article n'atteint pas l'article et tend à se déposer sur les parois et sur le plancher de la cabine, voir même sur les projecteurs eux-mêmes. En général, la cabine est équipée d'un système d'aspiration de poudre résiduelle, mettant l'intérieur de la cabine en dépression pour récupérer l'essentiel de cette poudre en vue de la recycler et de la mélanger avec de la poudre neuve pour le poudrage d'articles subséquents. Néanmoins, malgré ce système d'aspiration, de la poudre résiduelle reste généralement attachée aux parois et au plancher, de sorte qu'il est nécessaire de dépoudrer, c'est-à-dire nettoyer, l'intérieur de la cabine et les projecteurs, notamment si l'on souhaite changer de type de poudre, par exemple pour un changement de couleur. Cette opération, lorsqu'elle est effectuée manuellement par un opérateur, nécessite d'interrompre le fonctionnement de la cabine pour des questions de sécurité.

WO96/12568A1 décrit une cabine de poudrage de ce type, avec des projecteurs de poudre et une unité de nettoyage automatique. Toutefois, cette unité de nettoyage automatique est particulièrement encombrante et n'est adaptée qu'à une seule forme de cabine. En outre, l'unité de nettoyage nécessite, pour chaque nettoyage, d'être introduite à l'intérieur de la cabine depuis l'extérieur, ce qui prend du temps.

WO 2016/188626A2 décrit un procédé pour appliquer une peinture sur des pièces de carrosserie de véhicule automobile. Le procédé comprend un convoyage des pièces à peindre au travers d'une cabine de peinture et un peinturage des pièces dans la cabine à l'aide d'un dispositif d'application, lequel applique un jet pulvérisé de produit de revêtement, dont une partie est déposée sur les pièces et une autre partie est en suspension à l'intérieur de la cabine, sous la forme d'un brouillard de produit de revêtement. Le procédé comprend une extraction de ce brouillard de produit de revêtement au moyen d'un flux d'air.

DE 10 2012 018940 A1 décrit une cabine d'application d'un revêtement et un convoyeur, pour revêtir des articles. Un dispositif d'application d'une couche protectrice est prévu, à l'aide duquel des parties des unités de manipulation et d'application sont revêtues. Une fois l'application du produit de revêtement effectuée sur l'article, on applique un produit de nettoyage à base de dioxyde de carbone pour retirer la couche protectrice, facilitant le retrait du revêtement qui a pu être déposé sur les unités de manipulation et d'application.

L'invention vise à porter remède aux inconvénients de l'art antérieur, en visant à fournir un nouveau robot de poudrage électrostatique, grâce auquel le temps nécessaire pour le dépoudrage de la cabine est réduit et l'automatisation du dépoudrage est facilitée.

L'invention a pour objet un robot de poudrage électrostatique, pour une cabine de poudrage électrostatique, le robot de poudrage électrostatique comprenant un projecteur, qui est configuré pour effectuer un poudrage électrostatique. Selon l'invention, le robot de poudrage électrostatique comprend en outre : un bras robotique, qui est articulé et qui porte le projecteur pour positionner le projecteur au sein de la cabine de poudrage électrostatique, afin que le projecteur effectue le poudrage électrostatique d'un article à l'intérieur de la cabine de poudrage électrostatique ; et un souffleur, qui est configuré pour souffler un fluide de dépoudrage, préférentiellement de l'air, le bras robotique portant le souffleur pour positionner le souffleur au sein de la cabine de poudrage électrostatique, afin que le souffleur souffle le fluide de dépoudrage sur une surface à dépoudrer à l'intérieur de la cabine de poudrage électrostatique et décolle ainsi de la poudre résiduelle revêtant la surface à dépoudrer. Le projecteur comprend une électrode de poudrage, le poudrage électrostatique incluant de porter l'électrode de poudrage à un potentiel électrique de poudrage. Le robot de poudrage électrostatique comprend en outre une électrode de dépoudrage, indépendante de l'électrode de poudrage, l'électrode de dépoudrage étant configurée pour être portée à un potentiel électrique antistatique alors que le souffleur souffle le fluide de dépoudrage sur la surface à dépoudrer.

Une idée à la base de l'invention est d'équiper le projecteur et le souffleur sur le même robot de poudrage électrostatique, de sorte que le même robot sert à effectuer le poudrage électrostatique et le dépoudrage, c'est-à-dire le nettoyage de poudre résiduelle. Le bras robotique positionne, c'est-à-dire déplace, dirige et/ou oriente, aussi bien le projecteur que le souffleur. Ainsi, lorsque l'article à revêtir est présent dans la cabine de poudrage, le bras robotique positionne le projecteur à proximité de l'article, tout en orientant le projecteur en direction de l'article pour effectuer automatiquement le poudrage. Dès que l'article est poudré, la cabine de poudrage est prête pour le dépoudrage puisque le robot de poudrage est en permanence équipé du souffleur. Alors, le bras robotique peut immédiatement positionner le souffleur pour dépoudrer la surface à dépoudrer, en orientant ledit souffleur en direction de cette surface à dépoudrer. Il est possible d'effectuer le dépoudrage à tout moment souhaité, en particulier entre le poudrage de deux articles successifs. Puisque le bras robotique positionne le souffleur, la surface à dépoudrer peut être aussi bien une paroi intérieure de la cabine, un plancher de la cabine, un plafond de la cabine, que la surface d'un autre projecteur ou robot disposé dans la cabine. Cette possibilité de positionnement du souffleur par le bras robotique rend le dépoudrage particulièrement polyvalent, toute surface souhaitée à l'intérieur de la cabine pouvant être dépoudrée par positionnement adéquat du souffleur à l'aide du bras robotique. De la même façon que l'on a programmé le bras robotique pour le poudrage par le projecteur, on peut le programmer pour le dépoudrage par le souffleur. Le dépoudrage est donc facilement automatisable.

De préférence, le bras robotique comprend une tête de support, portant le projecteur et le souffleur, de sorte que le projecteur et le souffleur sont solidairement déplacés par le bras robotique.

De préférence, le bras robotique est un bras poly-articulé, configuré pour positionner le projecteur et le souffleur selon au moins cinq degrés de liberté.

De préférence, le projecteur comprend une première rangée de têtes de projection électrostatique ; et le souffleur comprend une rangée de buses de soufflage, disposée parallèlement à la première rangée de têtes de projection électrostatiques.

De préférence, le projecteur comprend une deuxième rangée de têtes de projection électrostatiques, disposée parallèlement à la première rangée de têtes de projection électrostatiques, la rangée de buses de soufflage étant disposée entre la première rangée et la deuxième rangée de têtes de projection électrostatique.

L'invention a également pour objet un système de poudrage électrostatique, comprenant : le robot de poudrage électrostatique tel que défini ci-avant ; et la cabine de poudrage électrostatique. Le robot de poudrage électrostatique est disposé de sorte que le bras robotique puisse positionner : le projecteur à l'intérieur de la cabine de poudrage électrostatique, pour que le projecteur effectue le poudrage électrostatique de l'article à l'intérieur de la cabine de poudrage électrostatique ; et le souffleur à l'intérieur de la cabine de poudrage électrostatique, pour que le souffleur souffle le fluide de dépoudrage sur la surface à dépoudrer à l'intérieur de la cabine de poudrage électrostatique.

De préférence, le système de poudrage électrostatique comprend en outre un autre robot, disposé à l'intérieur de la cabine de poudrage électrostatique. De préférence, le bras robotique est configuré pour positionner le souffleur de sorte que le souffleur puisse souffler le fluide de dépoudrage sur l'autre robot, afin de dépoudrer ledit autre robot.

De préférence, le système de poudrage comprend en outre un souffleur auxiliaire, qui est disposé au sein de la cabine de poudrage électrostatique et qui est configuré pour souffler du fluide de dépoudrage. De préférence, le bras robotique est configuré pour positionner le projecteur à proximité du souffleur auxiliaire, pour que le souffleur auxiliaire souffle du fluide de dépoudrage sur le projecteur afin de dépoudrer ledit projecteur.

De préférence, le souffleur est détachable du bras robotique. De préférence, le système de poudrage électrostatique comprend un dispositif de changement d'outil conçu pour mettre le souffleur à disposition du bras robotique lorsque le souffleur est détaché du bras robotique. De préférence, alors que le souffleur est détaché du bras robotique et mis à disposition du bras robotique par le dispositif de changement d'outil, le bras robotique est conçu pour s'équiper automatiquement avec le souffleur auprès du dispositif de changement d'outil, de façon à porter le souffleur, en vue d'effectuer le dépoudrage de la surface à dépoudrer.

L'invention a également pour objet un procédé de poudrage électrostatique, mis en oeuvre à l'aide du robot de poudrage électrostatique tel que défini ci-avant ou du système de poudrage tel que défini ci-avant. Le procédé de poudrage électrostatique comprend : un poudrage électrostatique de l'article, par le projecteur, alors que le projecteur est positionné par le bras robotique à l'intérieur de la cabine de poudrage électrostatique, le poudrage électrostatique incluant de porter l'électrode de poudrage au potentiel électrique de poudrage ; et, une fois le poudrage électrostatique effectué, un soufflage de fluide de dépoudrage sur la surface à dépoudrer, par le souffleur, alors que le souffleur est positionné par le bras robotique à l'intérieur de la cabine de poudrage électrostatique, l'électrode de dépoudrage étant portée au potentiel électrique antistatique alors que le souffleur souffle le fluide de dépoudrage sur la surface à dépoudrer.

L'invention sera mieux comprise et d'autres avantages de celle-ci apparaîtront à la lumière de la description suivante d'exemples conformes à son principe, illustrés aux dessins annexés dans lesquels :
[Fig 1] La figure 1 est une vue schématique en coupe d'un système de poudrage électrostatique, conforme à un mode de réalisation de l'invention, incluant un robot de poudrage électrostatique.
[Fig 2] La figure 2 est une vue en perspective d'une partie du robot de poudrage électrostatique de la figure 1.
[Fig 3] La figure 3 est une vue en perspective éclatée d'une partie du robot de poudrage électrostatique des figures 1 et 2.

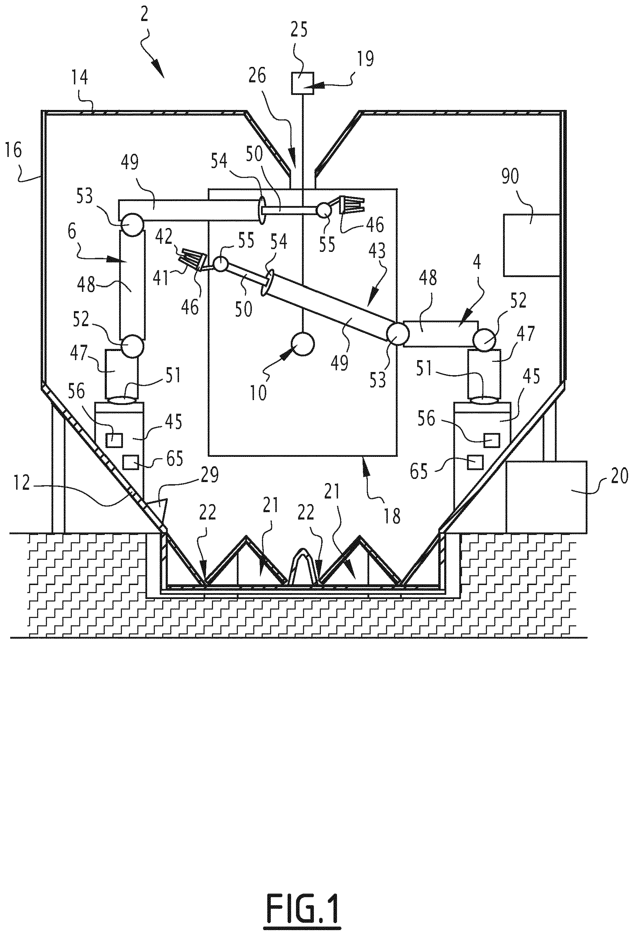

La figure 1 montre un système de poudrage électrostatique, qui inclut une cabine de poudrage électrostatique 2, un robot de poudrage électrostatique 4 et un robot de poudrage électrostatique 6.

La cabine 2 est destinée à loger une opération de poudrage électrostatique d'un article 10, alors que cet article 10 est positionné à l'intérieur de la cabine 2, le poudrage étant effectué à l'aide des robots 4 et 6.

Dans l'exemple de la figure 1, la cabine 2 comprend un plancher 12, un toit 14, qui s'étend au-dessus du plancher 12, et une paroi périphérique 16, qui relie le plancher 12 au toit 14, le long de leur périmètre respectif. La cabine 2 délimite en son sein un compartiment de poudrage essentiellement fermé, délimité par le plancher 12, le toit 14 et la paroi périphérique 16, à l'intérieur duquel le poudrage est effectué. La cabine 2 vise essentiellement à emprisonner en son sein toute poudre résiduelle qui n'aurait pas atteint l'article 10 au cours du poudrage.

L'intérieur de la cabine 2, au moins en ce qui concerne le plancher 12, le toit 14 et la paroi 16, est préférentiellement réalisée ou revêtu par un matériau électriquement isolant, par exemple une matière plastique polymère.

La cabine 2 comprend avantageusement une ouverture d'accès 18, qui est ménagée au travers de la paroi périphérique 16, pour l'introduction de l'article 10 dans la cabine 2. L'article 10 peut être extrait de la cabine 2 soit par la même ouverture d'accès 18, soit par une deuxième ouverture d'accès similaire, par exemple ménagée en face de l'ouverture 18, à l'autre extrémité de la cabine 2.

Le système de poudrage comprend préférentiellement un convoyeur 19, pour introduire l'article 10 dans la cabine 2 via l'ouverture 18 et retirer l'article 10 de la cabine 2 via l'ouverture 18 ou une autre ouverture. Le convoyeur 19 comprend par exemple un rail 25 au quel l'article 10 est suspendu, le rail embarquant un moyen d'entraînement de l'article 10 le long du rail, par exemple une courroie ou une chaîne. Le rail 25 est avantageusement disposé au-dessus du toit 14, le toit ménageant avantageusement un encoche longitudinale 26, qui suit la trajectoire du rail 25 en dessous du rail 25. Lors de son passage à l'intérieur de la cabine 2, l'article 10 est suspendu au rail 25 au travers de l'encoche 26. De préférence, l'article 10 est déplacé par le convoyeur 19 sans effectuer d'arrêt au sein de la cabine 2, le poudrage de l'article 10 étant effectué alors que le convoyeur 19 produit en permanence un mouvement d'avance de l'article 10.

De préférence, le convoyeur 19 est conçu pour transporter plusieurs articles à la suite, qui sont ici répartis le long du rail 25, pour un poudrage successif de ces articles dans la cabine 2.

Le système de poudrage comprend avantageusement un système d'aspiration, qui est raccordé à la cabine 2 pour aspirer de la poudre résiduelle contenue à l'intérieur de la cabine 2. Par exemple, le système d'aspiration comprend des conduits 21 d'aspiration de poudre qui sont disposés sous le plancher 12, ainsi que des ouïes 22 ménagées au travers du plancher 12 pour relier fluidiquement l'intérieur de la cabine 2 aux conduits 21, pour que la poudre résiduelle contenue dans la cabine 2 puisse être admise dans lesdits conduits 21 au travers des ouïes 22. De préférence, comme illustré, le plancher 12 est formé par un assemblage de pans inclinés favorisant un ruissellement de la poudre résiduelle jusque dans les ouïes 22.

L'aspiration de poudre résiduelle met avantageusement l'intérieur de la cabine 2 en dépression par rapport à l'extérieur de la cabine 2, de sorte qu'une admission d'air est effectuée à travers toute ouverture de la cabine 2, par exemple l'ouverture 18 et/ou l'encoche 26, ce qui évite un échappement de poudre résiduelle hors de la cabine par ces ouvertures.

Pour effectuer l'aspiration, le système d'aspiration comprend une pompe 20 d'aspiration de poudre, ou tout autre moyen de pompage approprié. La pompe 20 est ici disposée à l'extérieur de la cabine 2 et connectée aux conduits 21 pour aspirer la poudre résiduelle de la cabine 2 via les conduits 21, via les ouïes 22.

De préférence, tout ou partie de la poudre résiduelle ainsi aspirée est ensuite réintroduite dans la cabine 2 pour le poudrage électrostatique, éventuellement après traitement de cette poudre résiduelle et/ou en étant mélangée à de la poudre neuve.

L'article 10 est montré de façon schématique sur la figure 1. On peut prévoir d'effectuer le poudrage sur tout type d'article, en particulier un article métallique, tel qu'un cadre de vélo, une pièce de carrosserie ou une pièce de meuble.

La poudre qui est appliquée par poudrage électrostatique dans la cabine 2 sur l'article 10 vise à former un revêtement sur l'article 10. Le poudrage électrostatique permet d'appliquer la poudre sur l'article 10, sur les parties souhaitées de l'article 10, avec la répartition souhaitée. Ensuite, hors de la cabine 2, on pour faire réagir la poudre afin de fixer le revêtement et de lui donner ses caractéristiques définitives, sans préjudice à d'éventuels traitements ultérieurs. Pour faire réagir la poudre et ainsi fixer le revêtement, on fait préférentiellement subir un traitement thermique à l'article 10, à l'aide d'un four. Le revêtement obtenu constitue préférentiellement une peinture ou un vernis revêtant l'article 10.

De préférence, la poudre comprend une matière polymérique thermodurcissable. Une fois que l'article 10 est poudré dans la cabine 2, le traitement thermique appliqué sur l'article 10 fait durcir, c'est-à-dire entraîne la réticulation, de la matière thermodurcissable, ce qui fixe le revêtement.

Dans le présent exemple, les robots 4 et 6 sont identiques, si bien que la description du robot 4 vaut pour le robot 6. En variante, le robot 6 est différent du robot 4. On peut aussi prévoir que le système de poudrage électrostatique comporte un seul robot de poudrage électrostatique, ou un nombre de robots de poudrage électrostatiques différent de deux. Ces robots peuvent être identiques ou différents les uns des autres. En particulier, on peut prévoir que les robots 4 et 6 sont différents l'un de l'autre, mais comportent tous deux un souffleur et un projecteur respectifs, tels que décrits plus bas, ainsi qu'un bras robotique respectif, tel que décrit plus bas, pour positionner le souffleur et le projecteur. En variante, on peut prévoir que les deux robots 4 et 6 sont des robots de poudrage, mais que seul le robot 4 comporte un souffleur alors que l'autre en est dépourvu.

Ici, le robot 4 est entièrement disposé à l'intérieur de la cabine 2. Le robot 4 comprend essentiellement un projecteur 41, un souffleur 42 et un bras robotique 43.

Le bras robotique 43 porte le projecteur 41 et le souffleur 42, afin de les positionner à l'intérieur de la cabine 2, c'est-à-dire de les mouvoir et de les orienter dans la position souhaitée à l'intérieur de la cabine 2. Autrement dit, le projecteur 41 et le souffleur 42 sont positionnables à l'aide du bras 43, qui leur sert de support mobile. Pour cela, le bras 43 est articulé.

De préférence, le bras robotique 43 se présente sous la forme d'un bras poly-articulé, c'est-à-dire un robot multiaxe. Le bras robotique 43 permet donc de positionner le projecteur 41 et le souffleur 42 selon toute configuration souhaitée au sein de la cabine 2, notamment pour s'adapter, par simple commande et/ou programmation du bras robotique 43, à la forme de la cabine 2 et de l'article 10.

Le bras robotique 43 comprend un socle 45 et une tête de support 46, ainsi que, de préférence, plusieurs membres reliant le socle 45 à la tête 46, ici un membre 47, un membre 48, un membre 49 et un membre 50.

Le bras robotique 43 est préférentiellement entièrement reçu à l'intérieur de la cabine 2. En variante, une partie du bras 43 peut être hors de la cabine 2, par exemple le socle 45.

Le bras robotique 43 est supporté par le socle 45. Pour cela, le socle 45 est avantageusement fixé à la cabine 2, ici au plancher de la cabine 2. Le socle 45 supporte le projecteur 41 et le souffleur 42, via des membres 47, 48, 49 et 50 et de la tête 46.

Le membre 47 est supporté par le socle 45, en étant articulé de façon motorisée par rapport au socle 45, de préférence via une articulation motorisée 51, pivotant ici en lacet. Le membre 47 supporte, via le membre 48, les autres membres 49 et 50, la tête 46, le projecteur 41 et le souffleur 42. Dès lors, un déplacement du membre 47 par rapport au socle 45 entraîne un déplacement solidaire des membres 48, 49 et 50, de la tête 46, du projecteur 41 et du souffleur 42, par rapport à la cabine 2.

Le membre 48 est supporté par le membre 47, en étant articulé de façon motorisée par rapport au membre 47, de préférence via une articulation motorisée 52, pivotant ici en tangage. Le membre 48 supporte, via le membre 49, le membre 50, la tête 46, le projecteur 41 et le souffleur 42. Dès lors, un déplacement du membre 48 par rapport au membre 47 entraîne un déplacement solidaire des membres 49 et 50, de la tête 46, du projecteur 41 et du souffleur 42, par rapport au membre 47.

Le membre 49 est supporté par le membre 48, en étant articulé de façon motorisée par rapport au membre 48, de préférence via une articulation motorisée 53, pivotant ici en tangage. Le membre 49 supporte, via le membre 50, la tête 46, le projecteur 41 et le souffleur 42. Dès lors, un déplacement du membre 49 par rapport au membre 48 entraîne un déplacement solidaire du membre 50, de la tête 46, du projecteur 41 et du souffleur 42, par rapport au membre 48.

Le membre 50 est supporté par le membre 49, en étant articulé de façon motorisée par rapport au membre 49, de préférence via une articulation motorisée 54, pivotant ici en roulis. Le membre 50 supporte, via la tête 46, le projecteur 41 et le souffleur 42. Dès lors, un déplacement du membre 50 par rapport au membre 49 entraîne un déplacement solidaire de la tête 46, du projecteur 41 et du souffleur 42, par rapport au membre 49.

La tête 46 est supportée par le membre 50, en étant articulée de façon motorisée par rapport au membre 50, de préférence via une articulation motorisée 55, pivotant ici en tangage. La tête 46 supporte le projecteur 41 et le souffleur 42. Dès lors, un déplacement de la tête 46 par rapport au membre 50 entraîne un déplacement solidaire de du projecteur 41 et du souffleur 42, par rapport au membre 50.

Du fait de cette structure, le bras robotique 43 du présent exemple permet de positionner le projecteur 41 et le souffleur 42 avec cinq degrés de liberté par rapport à la cabine 2. Les cinq degrés de liberté incluent ici deux degrés de liberté en translation par rapport à la cabine, à savoir variation de position en hauteur et transverse, et deux degrés de liberté en rotation, à savoir tangage, roulis et lacet. Toutefois, on peut prévoir que le bras robotique 43 présente un nombre de degrés de liberté différent de cinq, notamment six degrés de liberté. Par ailleurs, on prévoit préférentiellement que les membres du bras robotiques 43 sont organisés en série comme pour l'exemple illustré, un membre donné étant porté par un membre prédécesseur de façon articulée, et supportant un membre successeur de façon articulée, le premier membre étant supporté par le socle 45 de façon articulée et le dernier membre supportant la tête 46 de façon articulée. Selon la situation, on peut prévoir un nombre de membres différent de quatre, de préférence au moins deux membres disposés ainsi, le premier membre étant supporté par le socle de façon articulée, et le deuxième membre étant supporté par le premier membre de façon articulée, et supportant la tête de façon articulée.

De préférence, le robot 4 comprend une unité électronique 56 pour commander le positionnement du projecteur 41 et du souffleur 42 via le bras robotique 43, par exemple de façon préprogrammée et/ou sur commande manuelle. Pour cela, l'unité électronique 56 commande le bras robotique 43, en particulier par commande des articulations motorisées 51, 52, 53, 54 et 55 pour opérer le positionnement des membres, dont dépend le positionnement du projecteur 41 et du souffleur 42. Par exemple, l'unité 56 comprend un contrôleur électronique, qui est relié par une liaison filaire à chaque articulation pour la commander, et est relié par une liaison filaire à une interface homme-machine pour la programmation et la commande du contrôleur électronique par une personne.

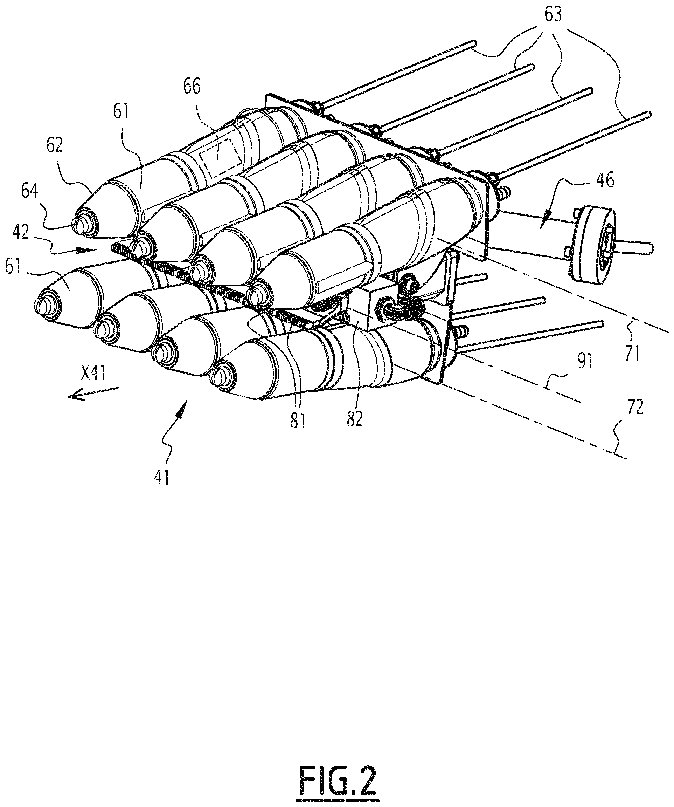

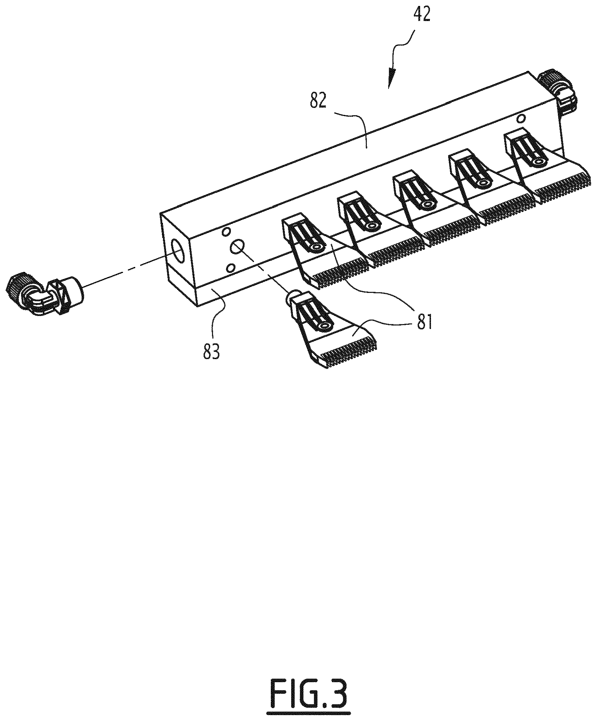

Les figures 2 et 3 montrent plus en détails un mode de réalisation préférentiel de la tête 46, du projecteur 41 et du souffleur 42. Le souffleur 42 est représenté seul sur la figure 3.

Le projecteur 41 est configuré pour effectuer le poudrage électrostatique de l'article 10, en étant pour cela positionné au sein de la cabine 2 par le bras robotique 43. Alors qu'ici, tout le robot 4 est à l'intérieur de la cabine 2, on prévoit au moins que le projecteur 41 et le souffleur 42 sont à l'intérieur de la cabine 2, de sorte que la poudre émise reste emprisonnée au sein de la cabine 2.

Le projecteur 41 comprend ici huit têtes de projection 61. Toutefois, le projecteur pourrait être constitué d'une seule tête de projection, ou d'un nombre de têtes de projection différent de huit.

Chaque tête de projection 61 se présente avantageusement sous la forme d'un pistolet automatique, qui est fixé sur la tête de support 46 du bras robotique 43, de sorte à être immobile par rapport à la tête de support 46.

Chaque tête de projection 61 intègre une buse de projection 62, à jet plat, rond ou vortex, pour émettre un jet de poudre de la forme souhaitée en direction de l'article 10. On peut choisir que toutes les têtes 61 ont une buse 62 identique, ou que les buses équipant les têtes sont différentes, pour produire des jets de caractéristiques différentes.

Préférentiellement, la buse 62 respective de chaque tête de projection 61 est individuellement alimentée en poudre à l'aide d'une conduite d'alimentation 63 respective, par exemple connectée à l'arrière de la tête de projection 61 concernée. De préférence, on peut projeter de la poudre de façon sélective, via seulement certaines têtes 61 sélectionnées. De préférence, la poudre est conduite jusqu'à la buse 62 via la conduite 63 sous l'action d'une pompe à poudre, elle-même alimentée en poudre neuve depuis une réserve de poudre neuve, et/ou en poudre recyclée, issue de la poudre résiduelle récupérée par le système d'aspiration susmentionné.

Alternativement à la buse 62, on peut prévoir que chaque tête 61 comprend un bol tournant.

On peut avantageusement prévoir que la poudre alimentant chaque tête 61 est différente des poudres alimentant les autres têtes, par exemple une poudre de couleur différente, ou une poudre visant à former un vernis alors qu'une autre poudre vise à former une peinture ou un primaire.

Alternativement, on peut prévoir que toutes les têtes de projection 61, ou que plusieurs têtes de projection 61, sont alimentées par la même poudre et/ou fonctionnent ensemble.

Chaque tête de projection 61 intègre également une unité haute-tension 66, montrée schématiquement par transparence pour une seule tête 61 sur la figure 2, mettant sous tension une électrode 64 de la tête de projection 61. L'électrode 64 est portée à un potentiel électrique dit « potentiel électrique de poudrage » par l'unité haute-tension 66. Le potentiel de poudrage est un potentiel haute-tension, préférentiellement continu. L'électrode 64 étant portée au potentiel de poudrage, elle applique ce potentiel de poudrage directement à la poudre du jet de poudre, ou à proximité du jet de poudre pour obtenir un effet corona. Par exemple, l'électrode 64 est formée à l'extrémité de la tête 61, ou se présente sous la forme de plusieurs électrodes autour de la tête.

Pour générer un champ électrostatique qui tend à coller la poudre du jet de poudre sur l'article 10, on prévoit préférentiellement que l'article 10 est mis à la masse et que le potentiel de poudrage est un potentiel continu négatif, par exemple de -80kV (kilovolts). Plus généralement, on préfère que le potentiel soit compris entre -70kV et -90kV. Par « continu », on entend que le potentiel appliqué par l'électrode 64 pour le poudrage ne change pas de signe. En variante, en fonction de l'application, du type de poudre et du type d'article, on peut prévoir que le potentiel de poudrage est de signe positif, par exemple à +70kV. De préférence, l'article 10 est mis à la masse par l'intermédiaire du convoyeur 19, lui-même à la masse. Plus généralement, on prévoit d'appliquer une différence de potentiel à haute-tension entre l'électrode 64 et l'article 10, où le potentiel de poudrage auquel l'électrode 64 est portée est très éloigné, notamment en étant très inférieur, vis-à-vis du potentiel auquel l'article 10 est porté.

Pour le poudrage électrostatique, on peut prévoir d'actionner toutes les têtes 61 en même temps. Alternativement, on peut prévoir d'actionner sélectivement certaines têtes 61, notamment si les têtes 61 émettent des poudres différentes et/ou des jets de caractéristiques différentes, ou encore si l'on souhaite effectuer un changement de poudre sur une tête 61 pendant qu'un poudrage est effectué par d'autres têtes 61.

Dans le présent exemple, comme illustré sur la figure 2, les têtes 61 sont agencées suivant deux rangées 71 et 72 parallèles. Ici, les deux rangées 71 et 72 ont le même nombre de têtes 61. Pour chaque rangée 71 et 72, les têtes 61 sont par exemple agencées à intervalle régulier. De préférence, chaque tête 61 de la rangée 71 est disposée en regard de l'une des têtes 61 de la rangée 71. Ainsi, on peut aussi considérer que les têtes 61 sont agencées par paires, chaque paire comprenant une tête 61 de la rangée 71 et une tête de la rangée 72. Pour chaque paire, les deux têtes 61 sont par exemple agencées selon une colonne qui est perpendiculaire aux rangées 71 et 72.

De préférence, les têtes 61 sont fixes par rapport à la tête de support 46 durant l'utilisation du projecteur 41 et son positionnement par le bras robotique 43. Le projecteur 41 est conçu pour effectuer le poudrage électrostatique de l'article 10, alors que l'article 10 est disposé dans une zone prédéterminée devant le projecteur 41. Autrement dit, le projecteur 41 doit être positionné en étant pointé en direction de l'article 10, et en étant dans une plage de distance prédéterminée par rapport à l'article 10. Cette zone peut dépendre de quelle(s) tête(s) 61 effectuent le poudrage électrostatique à l'instant considéré. Dans le présent exemple, toutes les têtes 61 sont orientées suivant une même direction X41, fixe par rapport à la tête de support 46, ou pour le moins, selon une direction qui approche la direction X41. Par exemple, pour chaque paire de têtes 61, les deux têtes sont orientées suivant des directions convergentes, qui sont concourantes avec la direction X41.

En résumé, effectuer le poudrage électrostatique de l'article 10 implique que, alors que le projecteur 41 est positionné au sein de la cabine 2 de façon à viser l'article 10, tout en étant à une distance prédéterminée de l'article 10, le projecteur 41 émet un jet de poudre et applique la différence de potentiel haute-tension entre le projecteur 41 et l'article 10. Cette condition est remplie notamment lorsque l'une des têtes 61 émet le jet de poudre tout en générant la différence de potentiel haute-tension, alors que la tête 61 est positionnée correctement par rapport à l'article 10. Pendant le poudrage électrostatique, le projecteur 41 peut être statique ou mobile, sous l'action du bras robotique 43, de façon à revêtir l'article 10 de poudre.

Le poudrage électrostatique de l'article 10 est avantageusement effectué conjointement par les robots 4 et 6, à l'aide de leur projecteur respectif, chaque robot effectuant par exemple le poudrage électrostatique d'une face opposée de l'article 10, ou de parties mutuellement éloignées de l'article 10.

Le souffleur 42 est configuré pour souffler de l'air en direction d'une surface à dépoudrer à l'intérieur de la cabine 2, en étant pour cela positionné dans la cabine 2 par le bras robotique 43. L'air peut être émis suivant un ou plusieurs jets, de préférence un jet plat, de façon continue ou pulsée. Ce soufflage d'air vise à retirer, c'est-à-dire à décoller, de la poudre résiduelle revêtant la surface à dépoudrer, cette poudre résiduelle s'étant déposée accidentellement au cours du poudrage électrostatique. Le fait de décoller la poudre résiduelle la met en suspension à l'intérieur de la cabine 2, favorisant ainsi son aspiration par le système d'aspiration susmentionné. De préférence, le système d'aspiration est activé durant et/ou après le dépoudrage effectué par le souffleur 42.

Il est avantageux que le souffleur 42 souffle de l'air plutôt qu'un autre fluide, car un même générateur d'air comprimé peut alimenter à la fois le projecteur 41 pour la projection de poudre et le souffleur 42 pour le dépoudrage. L'air étant un gaz qui ne se mélange pas à la poudre résiduelle, la poudre résiduelle n'est pas contaminée et peut être plus facilement réutilisée pour un nouveau poudrage électrostatique. Toutefois, on peut prévoir que le souffleur 42 souffle ou projette tout autre fluide de dépoudrage approprié, par exemple un autre gaz voire un liquide.

Toute surface à l'intérieur de la cabine 2 peut constituer une surface à dépoudrer, tant que le bras robotique 43 permet de positionner le souffleur 42 pour dépoudrer cette surface. En particulier, la surface à dépoudrer peut être tout ou partie du plancher 12, de la paroi 16 et du toit 14. La surface à dépoudrer peut être une partie du convoyeur 19 qui est disposée à l'intérieur de la cabine 2.

On prévoit avantageusement que le souffleur 42 du robot 4 effectue le dépoudrage de tout ou partie de l'autre robot 6, qui constitue alors la surface à dépoudrer. En particulier, le robot 4 peut effectuer le dépoudrage du projecteur 41 ou du souffleur 42 de l'autre robot 6. Réciproquement, le robot 6 peut effectuer un dépoudrage du robot 4, si le robot 6 est doté d'un souffleur 42. Plus généralement, le robot 4 peut être chargé du dépoudrage de tout robot ou équipement contenu dans la cabine 2, que ce soit un robot de poudrage ou un robot ayant une autre fonction, par exemple la manipulation d'articles 10, ou encore un autre dispositif automatique tel qu'un vérin ou un câblage contenu dans la cabine 2.

On peut aussi prévoir que l'article 10 constitue une surface à dépoudrer, par exemple si un poudrage incorrect a été effectué sur l'article 10, si un surplus de poudre doit être retiré de l'article 10, ou pour obtenir un état de surface particulier pour l'article 10.

Le souffleur 42 montré en détails sur les figures 2 et 3 comprend ici six buses de soufflage 81. Toutefois, le souffleur 42 pourrait être constitué d'une seule buse de soufflage 81, ou d'un nombre de buses 81 différent de six.

Chaque buse 81 est fixée sur la tête de support 46 du bras robotique 43, de sorte à être immobile par rapport à la tête de support 46. Ainsi, les buses 81 sont préférentiellement fixes par rapport aux têtes de projection 61. Plus généralement, le fait que le projecteur 41 et le souffleur 42 soient portés sur une unique tête de support 46 fait qu'ils sont déplacés en même temps par le bras robotique 43, c'est-à-dire solidairement, comme susmentionné. De préférence, on prévoit que le projecteur 41 et le souffleur 42 sont fixes par rapport à la tête 46 durant le poudrage électrostatique et durant le dépoudrage.

Les buses 81 sont alimentées avec du fluide de dépoudrage, ici de l'air, par une rampe d'alimentation 82, qui distribue un unique flux de fluide de dépoudrage à toutes les buses 81 en même temps. Autrement dit, l'alimentation en fluide de la rampe 82 entraîne une émission de fluide simultanée par toutes les buses 81. De préférence, les buses 81 sont fixés sur la tête de support 46 par l'intermédiaire de la rampe 82, elle-même fixée sur la tête 46.

Ici les buses de soufflage 81 sont agencée selon une rangée 91, qui est parallèle aux rangées 71 et 72 de têtes de projection 61, entre les deux rangées 71 et 72.

Chaque buse de soufflage 81 se présente avantageusement sous la forme d'une buse à jet plat, particulièrement efficace pour décoller la poudre résiduelle. On prévoit avantageusement que chaque buse 81 est orientée de façon que le jet plat soit dirigé suivant la direction X41, parallèle à la rangée 91 et à la direction X41. Dans cette situation, la combinaison des jets plats des buses 81 forme un flux plat de fluide de dépoudrage, c'est-à-dire un rideau de fluide de dépoudrage plan, qui est orienté suivant la direction X41 en étant parallèle à la rangée 91. Cela est particulièrement efficace pour décoller la poudre résiduelle de la surface à dépoudrer.

En variante, on peut prévoir que tout ou partie des buses de soufflage émet un jet de forme différente, par exemple un jet rond.

De préférence, le projecteur 41 et le souffleur 42 sont dirigés suivant la même direction X41, ce qui facilite la programmation du bras robotique 43 pour le positionnement des têtes 61 et des buses 81, les flux de poudre et de fluide de dépoudrage étant émis dans la même direction.

De préférence, on effectue le dépoudrage alors que l'ouverture d'accès 18 est fermée pour éviter de disperser de la poudre résiduelle à l'extérieur de la cabine 2. De préférence, on effectue le dépoudrage lorsqu'aucun poudrage électrostatique n'est effectué dans la cabine 2. De préférence, on effectue le dépoudrage lorsqu'aucun article à poudrer ou déjà poudré n'est contenu dans la cabine 2 afin de ne pas polluer accidentellement la surface de cet article avec de la poudre résiduelle décollée. Autrement dit, on effectue d'abord un poudrage électrostatique d'un ou plusieurs articles 10 avec le projecteur 41. Ensuite, une fois le poudrage effectué, on effectue un soufflage avec le souffleur 42. Ensuite, on peut effectuer un nouveau poudrage d'autres articles.

Avantageusement, puisque le souffleur 42, est toujours disposé dans la cabine 2, on effectue automatiquement le soufflage entre le poudrage de deux articles successifs. Par exemple, on peut prévoir que le dépoudrage est effectué systématiquement et automatiquement lorsque deux articles successifs sont suffisamment espacés le long du convoyeur 19, ou si l'approvisionnement de la cabine 2 avec des articles est temporairement interrompue. On peut effectuer le dépoudrage avec un seul robot à la fois, ou avec plusieurs robots en même temps.

Le souffleur 42 comprend une électrode 83, dite « électrode de dépoudrage », qui est indépendante de toute électrode de poudrage éventuellement portée par le projecteur 41. L'électrode 83 peut se présenter sous la forme d'une unique électrode ou de plusieurs électrodes. Ici, l'électrode 83 appartient à une barre déionisante, parfois appelée « barre ionisante » ou « barre antistatique active », qui est par exemple solidaire de la rampe d'alimentation 82, ou autrement intégré au souffleur 42. En variante, cette électrode 83 pourrait être portée par une autre partie du robot 4, voire même être disposée ailleurs dans la cabine 2.

L'électrode 83 vise à améliorer l'efficacité du dépoudrage de la surface à dépoudrer, notamment s'il s'agit du plancher 12, de la paroi 16 ou du toit 14. Pour cela, l'électrode 83 est portée à un potentiel électrique dit « potentiel électrique de dépoudrage », qui vise à déioniser le fluide de soufflage, l'air à proximité de la surface de dépoudrage, la surface de dépoudrage et/ou la poudre résiduelle soulevée durant le soufflage. Cela évite que ladite poudre résiduelle ne tende à se recoller à la surface à dépoudrer ou sur une autre surface, par effet électrostatique. Pour cela, le potentiel de dépoudrage est préférentiellement un potentiel haute-tension alternatif, ou pour le moins un potentiel haute tension dont la valeur change de signe. Par exemple, on prévoit que le potentiel alternatif haute tension s'élève à 10kV. Plus généralement on peut prévoir que le potentiel s'élève à au moins 7kV. On prévoit avantageusement que l'électrode 83 est portée au potentiel de dépoudrage par une unité haute-tension appartenant au souffleur 42, ou une unité haute-tension portée ailleurs sur le robot, voire externe. Ici, cette unité haute-tension est intégrée à la barre déionisante. En tous cas, l'unité haute-tension dévolue à l'électrode 83 est préférentiellement distincte de l'unité haute-tension 66.

De surcroît ou de manière alternative, on pourrait prévoir que le souffleur 42 lui-même est équipé d'une ou plusieurs électrodes, portée à haute-tension pendant le soufflage, pour favoriser ce décollement de poudre résiduelle.

En résumé, effectuer le soufflage de la surface à dépoudrer implique que, alors que le souffleur 42 est positionné au sein de la cabine 2 de façon à viser la surface à dépoudrer, tout en étant à une distance prédéterminée de la surface à dépoudrer, le souffleur 42 émet un jet de fluide de dépoudrage. Pendant le soufflage, le souffleur 42 peut être statique ou mobile, sous l'action du bras robotique 43, de façon à dépoudrer efficacement la surface à dépoudrer.

De préférence, le robot 4 comprend une unité électronique 65, pour commander le fonctionnement du projecteur 41 et du souffleur 42, c'est-à-dire de commander l'alimentation et ou la libération de poudre et de fluides, par exemple de façon préprogrammée et/ou sur commande manuelle. Pour cela, l'unité électronique 65 commande notamment les têtes de projection 61 et les buses de soufflage 81 et/ou la rampe 82, par exemple à l'aide d'un jeu d'électrovannes. Par exemple, l'unité 65 comprend un contrôleur électronique, qui est relié par une liaison filaire aux têtes 61, aux buses 81 et/ou à la rampe 82, ou à d'autres parties d'un réseau de poudre et fluides qui les alimente, et est reliée par une liaison filaire à une interface homme-machine pour la programmation et la commande du contrôleur électronique par une personne.

Comme montré sur la figure 1, on prévoit avantageusement que le système de poudrage comprend un souffleur auxiliaire 29, distinct des souffleurs 42 équipant les robots 4 et 6. Le souffleur auxiliaire 29 est préférentiellement fixe, en étant par exemple porté par le plancher 12, la paroi 16 ou le toit 14 de la cabine 2, sur l'intérieur. Comme le souffleur 42, le souffleur auxiliaire 29 est prévu pour souffler du fluide de dépoudrage, préférentiellement de l'air. Par exemple, le souffleur auxiliaire 29 est identique au souffleur 42. Ce souffleur auxiliaire 29 sert au dépoudrage du robot 4, notamment de son projecteur 41, qui peuvent difficilement être dépoudrés par son propre souffleur 42. Pour effectuer le dépoudrage du robot 4, on prévoit avantageusement que son bras robotique 43 positionne le projecteur 41, ou toute autre surface à dépoudrer du robot 4, à proximité du souffleur auxiliaire 29, en particulier sur le trajet du flux de fluide de dépoudrage émis. Ainsi, le dépoudrage du robot 4 est opéré par le souffleur auxiliaire 29, notamment le projecteur 41. Le dépoudrage du robot 6 peut être opéré de façon similaire pour tout autre robot équipant la cabine 2, notamment le robot 6. La présence du souffleur 29 est particulièrement avantageuse si la cabine 2 comporte un seul robot tel que le robot 4, ou si la cabine 2 comporte plusieurs robots dont un seul est équipé d'un souffleur 42.

Ci-dessus, on décrit un cas où le projecteur et le souffleur sont fixés à demeure sur le bras robotique. Toutefois, on peut alternativement prévoir que des parties du souffleur, voire tout le souffleur, et/ou des parties du projecteur, voire tout le projecteur, est en réalité détachable du bras robotique, préférentiellement de façon automatique.

En particulier, on peut prévoir que le système de poudrage comprend un dispositif de changement d'outil 90, représenté très schématiquement sur la figure 1, placé par exemple dans la cabine 2. Ce dispositif 90 met un ou plusieurs outils de rechange à disposition du ou des robots. Ce dispositif 90 se présente par exemple sous la forme d'un rack, avec un emplacement respectif pour chaque outil de rechange, ou un emplacement servant alternativement à plusieurs outils de rechange.

En particulier, le bras robotique 43 a accès au dispositif 90 pour équiper et déséquiper automatiquement, en fonction de l'opération à effectuer, le projecteur 41 et/ou le souffleur 42. Dans ce cas, le projecteur 41 et/ou le souffleur 42 se présentent comme des outils de rechange qui peuvent sélectivement être équipés sur le bras robotique 43. Par exemple, lors de l'opération de poudrage électrostatique, seulement le projecteur 41 est porté par le bras robotique 43 alors que le souffleur 42 est détaché du bras robotique 43, en étant porté par le dispositif 90, en attente d'une utilisation ultérieure. En vue d'effectuer une opération de dépoudrage, le bras robotique 43 s'équipe automatiquement avec le souffleur 42 auprès du dispositif 90, de façon à porter le souffleur 42. Pour équiper le souffleur 42, on peut avantageusement prévoir que le bras robotique 43 a préalablement déséquipé le projecteur 41 en le déposant dans le dispositif 90. En vue d'effectuer un poudrage électrostatique, le bras robotique 43 s'équipe automatiquement du projecteur 41 auprès du dispositif 90, de façon à porter le projecteur 41. Pour équiper le projecteur 41, on peut avantageusement prévoir que le bras robotique 43 a préalablement déséquipé le souffleur 42 en le déposant dans le dispositif 90.

Toute caractéristique issue d'un mode de réalisation ou d'une variante décrit ci-dessus peut être mise en oeuvre dans tout autre mode de réalisation ou variante décrit ci-dessus, pour autant que techniquement possible et que le mode de réalisation en découlant soit couvert par la portée des revendications annexées.

## Revendications

1. Robot de poudrage électrostatique (4), pour une cabine de poudrage électrostatique (2), le robot de poudrage électrostatique (4) comprenant :
• un projecteur (41), qui est configuré pour effectuer un poudrage électrostatique ;
• un bras robotique (43), qui est articulé et qui porte le projecteur (41) pour positionner le projecteur (41) au sein de la cabine de poudrage électrostatique (2), afin que le projecteur (41) effectue le poudrage électrostatique d'un article (10) à l'intérieur de la cabine de poudrage électrostatique (2) ; et
• un souffleur (42), qui est configuré pour souffler un fluide de dépoudrage, préférentiellement de l'air, le bras robotique (43) portant le souffleur (42) pour positionner le souffleur (42) au sein de la cabine de poudrage électrostatique (2), afin que le souffleur (42) souffle le fluide de dépoudrage sur une surface à dépoudrer à l'intérieur de la cabine de poudrage électrostatique (2) et décolle ainsi de la poudre résiduelle revêtant la surface à dépoudrer ;
dans lequel :
• le projecteur (41) comprend une électrode de poudrage (64), le poudrage électrostatique incluant de porter l'électrode de poudrage (64) à un potentiel électrique de poudrage ; et
• le robot de poudrage électrostatique (4) comprend en outre une électrode de dépoudrage (83), indépendante de l'électrode de poudrage (64), l'électrode de dépoudrage (83) étant configurée pour être portée à un potentiel électrique antistatique alors que le souffleur (42) souffle le fluide de dépoudrage sur la surface à dépoudrer.

2. Robot de poudrage électrostatique (4) selon la revendication 1, dans lequel le bras robotique (43) comprend une tête de support (46), portant le projecteur (41) et le souffleur (42), de sorte que le projecteur (41) et le souffleur (42) sont solidairement déplacés par le bras robotique (43).

3. Robot de poudrage électrostatique (4) selon l'une quelconque des revendications précédentes, dans lequel le bras robotique (43) est un bras poly-articulé, configuré pour positionner le projecteur (41) et le souffleur (42) selon au moins cinq degrés de liberté.

4. Robot de poudrage électrostatique (4) selon l'une quelconque des revendications précédentes, dans lequel :
• le projecteur (41) comprend une première rangée (71) de têtes de projection électrostatique (61) ; et
• le souffleur (42) comprend une rangée (91) de buses de soufflage (81), disposée parallèlement à la première rangée de têtes de projection électrostatiques.

5. Robot de poudrage électrostatique (4) selon la revendication 4, dans lequel le projecteur (41) comprend une deuxième rangée (72) de têtes de projection électrostatiques (61), disposée parallèlement à la première rangée (71) de têtes de projection électrostatiques (61), la rangée (91) de buses de soufflage (81) étant disposée entre la première rangée (71) et la deuxième rangée (72) de têtes de projection électrostatique (61).

6. Système de poudrage électrostatique, comprenant :
• le robot de poudrage électrostatique (4) selon l'une quelconque des revendications précédentes ; et
• la cabine de poudrage électrostatique (2), le robot de poudrage électrostatique (4) étant disposé de sorte que le bras robotique (43) puisse positionner :
◆ le projecteur (41) à l'intérieur de la cabine de poudrage électrostatique (2), pour que le projecteur (41) effectue le poudrage électrostatique de l'article (10) à l'intérieur de la cabine de poudrage électrostatique (2) ; et
◆ le souffleur (42) à l'intérieur de la cabine de poudrage électrostatique (2), pour que le souffleur (42) souffle le fluide de dépoudrage sur la surface à dépoudrer à l'intérieur de la cabine de poudrage électrostatique (2).

7. Système de poudrage électrostatique, selon la revendication 6, dans lequel :
• le système de poudrage électrostatique comprend en outre un autre robot (6), disposé à l'intérieur de la cabine de poudrage électrostatique (2) ; et
• le bras robotique (43) est configuré pour positionner le souffleur (42) de sorte que le souffleur (42) puisse souffler le fluide de dépoudrage sur l'autre robot (6), afin de dépoudrer ledit autre robot (6).

8. Système de poudrage électrostatique selon l'une quelconque des revendications 6 ou 7, dans lequel :
• le système de poudrage comprend en outre un souffleur auxiliaire (29), qui est disposé au sein de la cabine de poudrage électrostatique (2) et qui est configuré pour souffler du fluide de dépoudrage ; et
• le bras robotique (43) est configuré pour positionner le projecteur (41) à proximité du souffleur auxiliaire (29), pour que le souffleur auxiliaire (29) souffle du fluide de dépoudrage sur le projecteur (41) afin de dépoudrer ledit projecteur (41).

9. Système de poudrage électrostatique selon l'une quelconque des revendications 6 à 8, dans lequel :
• le souffleur (42) est détachable du bras robotique (43) ;
• le système de poudrage électrostatique comprend un dispositif de changement d'outil (90) conçu pour mettre le souffleur (42) à disposition du bras robotique (43) lorsque le souffleur (42) est détaché du bras robotique (43) ; et
• alors que le souffleur (42) est détaché du bras robotique (43) et mis à disposition du bras robotique (43) par le dispositif de changement d'outil (90), le bras robotique (43) est conçu pour s'équiper automatiquement avec le souffleur (42) auprès du dispositif de changement d'outil (90), de façon à porter le souffleur (42), en vue d'effectuer le dépoudrage de la surface à dépoudrer.

10. Procédé de poudrage électrostatique, mis en oeuvre à l'aide du robot de poudrage électrostatique (4) selon l'une quelconque des revendications 1 à 5 ou du système de poudrage selon l'une quelconque des revendications 6 à 9, le procédé de poudrage électrostatique comprenant :
• un poudrage électrostatique de l'article (10), par le projecteur (41), alors que le projecteur (41) est positionné par le bras robotique (43) à l'intérieur de la cabine de poudrage électrostatique (2), le poudrage électrostatique incluant de porter l'électrode de poudrage (64) au potentiel électrique de poudrage ; et
• une fois le poudrage électrostatique effectué, un soufflage de fluide de dépoudrage sur la surface à dépoudrer, par le souffleur (42), alors que le souffleur (42) est positionné par le bras robotique (43) à l'intérieur de la cabine de poudrage électrostatique (2), l'électrode de dépoudrage (83) étant portée au potentiel électrique antistatique alors que le souffleur (42) souffle le fluide de dépoudrage sur la surface à dépoudrer.

## Patentansprüche

1. Elektrostatischer Pulverbeschichtungsroboter (4), für eine elektrostatische Pulverbeschichtungskabine (2), der elektrostatische Pulverbeschichtungsroboter (4) umfassend:
• einen Projektor (41), der konfiguriert ist, um ein elektrostatisches Pulverbeschichten durchzuführen;
• einen Roboterarm (43), der gelenkig ist und den Projektor (41) trägt, um den Projektor (41) innerhalb der elektrostatischen Pulverbeschichtungskabine (2) zu positionieren, sodass der Projektor (41) die elektrostatische Pulverbeschichtung eines Gegenstands (10) innerhalb der elektrostatischen Pulverbeschichtungskabine (2) durchführt; und
• ein Gebläse (42), das konfiguriert ist, um ein Pulverentfernungsfluid, vorzugsweise Luft, zu blasen, wobei der Roboterarm (43) das Gebläse (42) trägt, um das Gebläse (42) innerhalb der elektrostatischen Pulverbeschichtungskabine (2) zu positionieren, sodass das Gebläse (42) das Pulverentfernungsfluid auf eine von Pulver zu befreiende Oberfläche innerhalb der elektrostatischen Pulverbeschichtungskabine (2) bläst und dadurch das Restpuder abzulösen, das die von Pulver zu befreiende Oberfläche bedeckt;
wobei:
• der Projektor (41) eine Pulverbeschichtungselektrode (64) umfasst, wobei das elektrostatische Pulverbeschichten das Anlegen eines elektrischen Pulverbeschichtungspotentials an die Pulverbeschichtungselektrode (64) beinhaltet; und
• der elektrostatische Pulverbeschichtungsroboter (4) ferner eine von der Pulverbeschichtungselektrode (64) unabhängige Pulverentfernungselektrode (83) umfasst, wobei die Pulverentfernungselektrode (83) konfiguriert ist, um auf ein antistatisches elektrisches Potenzial gebracht zu werden, während das Gebläse (42) das Pulverentfernungsfluid auf die von Pulver zu befreiende Oberfläche bläst.

2. Elektrostatischer Pulverbeschichtungsroboter (4) nach Anspruch 1, wobei der Roboterarm (43) einen Haltekopf (46) umfasst, der den Projektor (41) und das Gebläse (42) trägt, sodass der Projektor (41) und das Gebläse (42) fest verbunden durch den Roboterarm (43) bewegt werden.

3. Elektrostatischer Pulverbeschichtungsroboter (4) nach einem der vorherigen Ansprüche, wobei der Roboterarm (43) ein Mehrgelenkarm ist, der konfiguriert ist, um den Projektor (41) und das Gebläse (42) in mindestens fünf Freiheitsgraden zu positionieren.

4. Elektrostatischer Pulverbeschichtungsroboter (4) nach einem der vorherigen Ansprüche, wobei:
• der Projektor (41) eine erste Reihe (71) von elektrostatischen Projektionsköpfen (61) umfasst; und
• das Gebläse (42) eine Reihe (91) von Gebläsedüsen (81) umfasst, die parallel zu der ersten Reihe von elektrostatischen Projektionsköpfen angeordnet sind.

5. Elektrostatischer Pulverbeschichtungsroboter (4) nach Anspruch 4, wobei der Projektor (41) eine zweite Reihe (72) von elektrostatischen Projektionsköpfen (61) umfasst, die parallel zu der ersten Reihe (71) von elektrostatischen Projektionsköpfen (61) angeordnet sind, wobei die Reihe (91) von Gebläsedüsen (81) zwischen der ersten Reihe (71) und der zweiten Reihe (72) von elektrostatischen Projektionsköpfen (61) angeordnet ist.

6. Elektrostatisches Pulverbeschichtungssystem, umfassend:
• den elektrostatischen Pulverbeschichtungsroboter (4) nach einem der vorherigen Ansprüche; und
• die elektrostatische Pulverbeschichtungskabine (2), wobei der elektrostatische Pulverbeschichtungsroboter (4) angeordnet ist, sodass der Roboterarm (43) Folgendes positionieren kann:
den Projektor (41) innerhalb der elektrostatischen Pulverbeschichtungskabine (2), sodass der Projektor (41) das elektrostatische Pulverbeschichten des Gegenstands (10) innerhalb der elektrostatischen Pulverbeschichtungskabine (2) bewirkt; und
das Gebläse (42) im Inneren der elektrostatischen Pulverbeschichtungskabine (2), sodass das Gebläse (42) das Pulverentfernungsfluid auf die von Pulver zu befreiende Oberfläche im Inneren der elektrostatischen Pulverbeschichtungskabine (2) bläst.

7. Elektrostatisches Pulverbeschichtungssystem, nach Anspruch 6, wobei:
• das elektrostatische Pulverbeschichtungssystem ferner einen weiteren Roboter (6) umfasst, der im Inneren der elektrostatischen Pulverbeschichtungskabine (2) angeordnet ist; und
• der Roboterarm (43) konfiguriert ist, um das Gebläse (42) zu positionieren, sodass das Gebläse (42) das Pulverentfernungsfluid auf den anderen Roboter (6) blasen kann, um den anderen Roboter (6) von Pulver zu befreien.

8. Elektrostatisches Pulverbeschichtungssystem nach einem der Ansprüche 6 oder 7, wobei:
• das Pulverbeschichtungssystem ferner ein Zusatzgebläse (29) umfasst, das innerhalb der elektrostatischen Pulverbeschichtungskabine (2) angeordnet und konfiguriert ist, um Pulverentfernungsfluid auszublasen; und
• der Roboterarm (43) konfiguriert ist, um den Projektor (41) in der Nähe des Zusatzgebläses (29) zu positionieren, sodass das Zusatzgebläse (29) Pulverentfernungsfluid auf den Projektor (41) bläst, um den Projektor (41) von Pulver zu befreien.

9. Elektrostatisches Pulverbeschichtungssystem nach einem der Ansprüche 6 bis 8, wobei:
• das Gebläse (42) von dem Roboterarm (43) abnehmbar ist;
• das elektrostatische Pulverbeschichtungssystem eine Werkzeugwechselvorrichtung (90) umfasst, die ausgelegt ist, um das Gebläse (42) dem Roboterarm (43) bereitzustellen, wenn das Gebläse (42) von dem Roboterarm (43) abgenommen ist; und
• während das Gebläse (42) von dem Roboterarm (43) abgenommen und dem Roboterarm (43) durch die Werkzeugwechselvorrichtung (90) bereitgestellt ist, der Roboterarm (43) ausgelegt ist, um sich automatisch mit dem Gebläse (42) bei der Werkzeugwechselvorrichtung (90) auszurüsten, um das Gebläse (42) zu tragen, um das Pulverentfernen von der von Pulver zu befreienden Oberfläche durchzuführen.

10. Elektrostatisches Pulverbeschichtungsverfahren, das mittels des elektrostatischen Pulverbeschichtungsroboters (4) nach einem der Ansprüche 1 bis 5 oder des Pulverbeschichtungssystems nach einem der Ansprüche 6 bis 9 durchgeführt wird, das elektrostatische Pulverbeschichtungsverfahren Folgendes umfassend:
• ein elektrostatisches Pulverbeschichten des Gegenstands (10) durch den Projektor (41), während der Projektor (41) durch den Roboterarm (43) innerhalb der elektrostatischen Pulverbeschichtungskabine (2) positioniert ist, wobei das elektrostatische Pulverbeschichten ein Anlegen der Pulverbeschichtungselektrode (64) an das elektrische Pulverbeschichtungspotential beinhaltet; und
• nach dem elektrostatischen Pulverbeschichten ein Blasen von Pulverentfernungsfluid auf die von Pulver zu befreiende Oberfläche durch das Gebläse (42), während das Gebläse (42) durch den Roboterarm (43) innerhalb der elektrostatischen Pulverbeschichtungskabine (2) positioniert wird, wobei die Pulverentfernungselektrode (83) auf ein antistatisches elektrisches Potential gebracht wird, während das Gebläse (42) das Pulverentfernungsfluid auf die von Pulver zu befreiende Oberfläche bläst.

## Claims

1. An electrostatic powdering robot (4), for an electrostatic powder coating booth (2), the electrostatic powdering robot (4) comprising:
- a projector (41), which is configured to perform an electrostatic powdering,
- a robotic arm (43), which is articulated and carries the projector (41) to position the projector (41) inside the electrostatic powder coating booth (2), so that the projector (41) performs the electrostatic powdering of an article (10) inside the electrostatic powder coating booth (2); and
- a blower (42), which is configured to blow a powder removal fluid, preferably air, the robotic arm (43) carrying the blower (42) to position the blower (42) inside the electrostatic powder coating booth (2), so that the blower (42) blows the powder removal fluid onto a surface to be depowdered, inside the electrostatic powder coating booth (2), and thereby removes residual powder coating from the surface to be depowdered;
wherein:
- the projector (41) comprises a powdering electrode (64), the electrostatic powdering including raising the powdering electrode (64) to a powdering electrical potential; and
- the electrostatic powdering robot (4) further comprises a powder removal electrode (83), independent of the powdering electrode (64), the powder removal electrode (83) being configured to be raised to an anti-static electrical potential while the blower (42) blows the powder removal fluid onto the surface to be depowdered.

2. The electrostatic powdering robot (4) according to claim 1, wherein the robotic arm (43) comprises a support head (46), carrying the projector (41) and the blower (42), so that the projector (41) and the blower (42) are jointly moved by the robotic arm (43).

3. The electrostatic powdering robot (4) according to any one of the preceding claims, wherein the robotic arm (43) is a poly-articulated arm, configured to position the projector (41) and the blower (42) with at least five degrees of freedom.

4. The electrostatic powdering robot (4) according to any of the preceding claims, wherein:
- the projector (41) comprises a first row (71) of electrostatic projection heads (61); and
- the blower (42) comprises a row (91) of blowing nozzles (81), arranged parallel to the first row of electrostatic projection heads.

5. The electrostatic powdering robot (4) according to claim 4, wherein the projector (41) comprises a second row (72) of electrostatic projection heads (61), arranged parallel to the first row (71) of electrostatic projection heads (61), the row (91) of blowing nozzles (81) being arranged between the first row (71) and second row (72) of electrostatic projection heads (61).

6. An electrostatic powdering system, comprising:
- the electrostatic powdering robot (4) according to any of the preceding claims; and
- the electrostatic powder coating booth (2), the electrostatic powdering robot (4) being arranged so that the robotic arm (43) can position:
- the projector (41) inside the electrostatic powder coating booth (2), so that the projector (41) performs the electrostatic powdering of the article (10) inside the electrostatic powder coating booth (2); and
- the blower (42) inside the electrostatic powder coating booth (2), for the blower (42) to blow the powder removal fluid onto the surface to be depowdered inside the electrostatic powder coating booth (2).

7. The electrostatic powdering system, according to claim 6, wherein:
- the electrostatic powdering system further comprises another robot (6), arranged inside the electrostatic powder coating booth (2); and
- the robotic arm (43) is configured to position the blower (42) so that the blower (42) can blow the powder removal fluid onto the other robot (6), in order to remove powder from said other robot (6).

8. The electrostatic powdering system according to any one of claims 6 or 7, wherein:
- the powdering system further comprises an auxiliary blower (29), which is positioned inside the electrostatic powder coating booth (2) and is configured to blow powder removal fluid; and
- the robotic arm (43) is configured to position the projector (41) in proximity to the auxiliary blower (29), so that the auxiliary blower (29) blows powder removal fluid onto the projector (41) to remove powder from said projector (41).

9. The electrostatic powdering system according to any one of claims 6 to 8, wherein:
- the blower (42) is detachable from the robotic arm (43);
- the electrostatic powder coating system comprises a tool changing device (90) adapted to make the blower (42) available to the robotic arm (43) when the blower (42) is detached from the robotic arm (43); and
- while the blower (42) is detached from the robotic arm (43) and made available to the robotic arm (43) by the tool changing device (90), the robotic arm (43) is adapted to automatically equip itself with the blower (42) at the tool changing device (90) so as to carry the blower (42) in order to carry out the powder removal of the surface to be depowdered.

10. An electrostatic powdering method, carried out by means of the electrostatic powdering robot (4) according to any one of claims 1 to 5 or of the powdering system according to any one of claims 6 to 9, the electrostatic powdering method comprising:
- electrostatic powdering of the article (10) by the projector (41), while the projector (41) is positioned by the robotic arm (43) inside the electrostatic powder coating booth (2), the electrostatic powdering including raising of the powdering electrode (64) to the powdering electric potential; and
- once the electrostatic powdering has been carried out, the blower (42) blowing powder removal fluid onto the surface to be depowdered, while the blower (42) is positioned by the robotic arm (43) inside the electrostatic powder coating booth (2), the powder removal electrode (83) being raised to the anti-static electrical potential while the blower (42) blows the powder removal fluid onto the surface to be depowdered.
